# EUROPÄISCHE PATENTANMELDUNG

(11) **EP 2 065 735 A1**
(43) Veröffentlichungstag der Anmeldung: **03.06.2009**
(21) Anmeldenummer: 07023322.6
(22) Anmeldetag: 01.12.2007
(51) Int. Cl.: G02B 1/04

(54) **Optische Elemente aus flammfesten Kunststoffen**

(71) Anmelder: Schott AG, 55122 Mainz (DE)
(72) Erfinder: Gaydoul, Ekkehard, 64401 Gross-Bieberau (DE); Zwickel, Gerhard, 91054 Erlangen (DE); Schnell, Rupert, Dr., 67551 Worms (DE)

(57) **Zusammenfassung**

Die Erfindung betrifft optische Element für Bereiche mit erhöhten Brandsicherheitsbestimmungen, die einen Farbwiedergabe-Index Rₐ bei einer Dicke von 4 mm mindestens 97 aufweisen, flammbeständig nach DIN 60332 sind und überwiegend aus einem Kunststoff mit den Strukturelementen ausgewählt aus der Gruppe der Sulfone und/oder Sulfide und/oder Ether und/oder Ester und/oder Ketone und/oder Imide bestehen.

## Beschreibung

Die Erfindung betrifft optische Elemente aus Kunststoffen, welche für Anwendungen in Bereichen mit erhöhten Brandsicherheitsbestimmungen geeignet sind, und Anwendungen der erfindungsgemäßen optischen Elemente. Solche Bereiche mit erhöhten Brandsicherheitsbestimmungen sind insbesondere Flugzeuginnenräume oder aber auch Schiffe, weil sich in einem Brandfall die Flucht der Passagiere üblicherweise schwierig gestalten kann. Daher gelten für Bauteile, welche in solchen Transportmitteln Anwendung finden, besondere Brandschutzbestimmungen, die in den entsprechenden Normenwerken oder Vorschriften niedergeschrieben sind. Für Flugzeuge sind insbesondere die Normen JAR/FAR 25.853a, JAR/FAR 25.869 und die ABD0031 anzuwenden.

Aus dem Stand der Technik sind hochtemperaturbeständige Kunststoffe bekannt, beispielsweise Polyphenylensulfid, das bei einem Dauereinsatz bis zu Temperaturen von 200°C beständig sein soll und kurzzeitig Temperaturen von bis zu 240°C ausgesetzt sein kann. Es gilt als flammhemmend nach der deutschen DIN-Norm 4102, d.h. nach Entfernen der Zündquelle verlöscht es selbstständig.

Die DE 39 00 674 A1 beschreibt ebenfalls hochtemperaturbeständige Kunststoffe auf der Basis von Copolymeren aus Polysulfon und Polyimid, welche für eine Dauerbelastung in dem Bereich von 150°C bis 180°C geeignet sind.

Allen diesen Kunststoffen ist jedoch zueigen, dass sie zwar in gewisser Weise transparent sind, aber eine für den Betrachter mit bloßem Auge deutlich erkennbare Gelbfärbung aufweisen und daher als Material für optische Elemente, durch die Licht im sichtbaren Spektralbereich hindurchtritt, nicht anwendbar sind. Aus diesem Grunde werden beispielsweise die Außenscheiben von Flugzeugfenstern aufgrund einer Ausnahmegenehmigung aus Polymethylmethacrylat (PMMA) gefertigt, auch bekannt unter dem Handelsnamen Plexiglas. Dieses ist transparent und weitgehend farblos, aber nicht flammhemmend. Dieser Kompromiss wird eingegangen, weil man dem Passagier nicht zumuten möchte, durch deutlich gefärbte Scheiben schauen zu müssen.

Auch die Spiegel in Waschräumen von Flugzeugen werden gegenwärtig nicht aus Kunststoffen gefertigt, sondern aus poliertem Aluminium hergestellt, welches mit dem Nachteil behaftet ist, dass gerade der Polierprozess teuer in der Herstellung ist. Darüber hinaus ist eine polierte Aluminiumoberfläche kratzempfindlich, weshalb die Spiegel in Waschräumen von Flugzeugen häufig ausgetauscht werden müssen. Auch dieser Ersatz macht sich negativ in der Betriebskostenbilanz der Fluglinien bemerkbar.

Glas kommt als Material für diese Anwendungen in Passagierflugzeugen nicht zum Einsatz, weil Verbundglasscheiben aufgrund der Splitterschutzanforderungen erforderlich wären und diese ein hohes Gewicht aufweisen, so dass sich die Nutzlast des Flugzeuges verringern oder sich die Betriebskosten in unerwünschter Weise erhöhen würden.

Vor diesem Hintergrund hat sich die vorliegende Erfindung zur Aufgabe gemacht, optische Elemente aus Kunststoff bereit zu stellen, welche transparent sind und eine möglichst geringe Eigenfärbung aufweisen, sowie Anwendungen der erfindungsgemäßen optischen Elemente in Bereichen mit erhöhten Brandsicherheitsbestimmungen. Unter Eigenfärbung wird im Sinne dieser Anmeldung eine Färbung des Kunststoffmaterials verstanden, wenn es keine färbenden Zusatzstoffe enthält, die gezielt und gewollt zugesetzt werden können.

Die Aufgabe wird durch den unabhängigen Anspruch gelöst. Bevorzugte Ausführungsformen ergeben sich aus den Unteransprüchen.

Kunststoffe im Sinne der vorliegenden Erfindung sind zumindest teilweise synthetisch hergestellte hochmolekulare Materialien, auch Polymere genannt, welche durch kovalente Verknüpfung von Ausgangsstoffen, vor allem niedermolekularen Monomeren erzielt werden.

Der Begriff ist unabhängig von der Herstellungsmethode der erfindungsgemäßen Kunststoffe und umfasst somit Kunststoffe, welche beispielsweise durch Kettenpolymerisation (kinetische Kettenreaktion oder eng. chain growth polymerisation) oder beispielsweise durch Stufenpolymerisation (engl. step-growth polymerisation) hergestellt wurden, dort insbesondere durch Polykondensation oder durch Polyaddition. Auch sämtliche Additive, welche zugegeben werden können, sind von dem Begriff umfasst. Dies betrifft insbesondere Weichmacher, Stabilisatoren, Füllstoffe und/oder Farbmittel.

Das erfindungsgemäße optische Element weist einen Farbwiedergabe-Index Rₐ bei einer Dicke von 4 mm auf, der mindestens 97 beträgt. Es ist flammbeständig nach DIN 60332 und es besteht überwiegend aus einem Kunststoff mit den Strukturelementen ausgewählt aus der Gruppe der Sulfone und/oder Sulfide und/oder Ether und/oder Ester und/oder Ketone und/oder Imide.

Der Farbwidergabe-Index Rₐ ist ein Maß für die Farbwiedergabequalität. Der beste Wert mit der natürlichsten Farbwiedergabe ist 100. Bei optischen Elementen, durch die Licht hindurchtritt, entsteht eine Färbung durch die Absorption von Licht bei bestimmten Wellenlängen. Die absorbierten Spektralanteile kann der Betrachter, welcher das durch das optische Element hindurchtretende Licht beobachtet, nicht mehr sehen - es wird aus dem ursprünglichen Spektrum der Lichtquelle herausgefiltert, wodurch der Eindruck entsteht, das optische Element sei gefärbt. In einem solchen Fall nimmt der Farbwiedergabe-Index Rₐ-Werte von kleiner als 100 an. Werte von größer als 90 gelten als sehr gut.

Den Farbwiedergabe-Index Rₐ ermittelt man durch Auswertung der Farbverschiebung des durch das optische Element hindurchtretenden Lichtes. Dabei werden zunächst acht verschiedenen Farbproben von definierten Testfarben von einer Lichtquelle beschienen und begutachtet. Danach wird das optische Element vor der Lichtquelle angebracht, so dass deren Licht durch das optische Element hindurchtritt, und die acht Proben der Testfarben werden wiederum begutachtet.

Der Wert der Verschiebung des Farbeindrucks durch das Einbringen des optischen Elements wird bei jeder Farbprobe wird mit der Wichtung 1/8 zum Farbwiedergabeindex aufsummiert. Das dabei verwendete Licht entstammt einer Normlichtquelle D₆₅. Das Verfahren zur Bestimmung des Farbwiedergabe-Index Rₐ und die Definition der Normlichtquelle D₆₅ ist detailliert in der DIN-Norm DIN EN 410 beschrieben, auf welche in dieser Anmeldung Bezug genommen wird. Der Rₐ-Wert der erfindungsgemäßen optischen Elemente wird an im wesentlichen planaren Scheiben mit einer Dicke von 4 mm bestimmt.

Das erfindungsgemäße optische Element ist ferner flammfest nach DIN 60332. Dies bedeutet, dass es nach Entfernen der Zündquelle innerhalb einer kurzen Zeit selbst erlischt. Die Flammtests werden je nach Applikation und Einbausituation unterschieden zwischen vertikalen und/oder horizontalen Tests, bei der die Dauer der Flammeneinwirkung 12 Sekunden oder 60 Sekunden beträgt. In dem Normenwerk wird als Zündquelle ein mit Methangas betriebener Brenner verwendet. Die Testproben müssen Abmessungen von 305 mm mal 75 mm aufweisen. Die Tests sollen bei einer Umgebungstemperatur von 23 ± 2 °C und bei 50% relativer Luftfeuchtigkeit durchgeführt werden. Untersucht werden Brennlänge, das heißt die erlaubte Strecke, auf welcher das Material in einer vorgegebenen Zeiteinheit brennen darf, sowie Brenndauer etwaiger Tropfen. Das Verfahren ist detailliert in den oben genannten Normen und deren Verweisen beschrieben, auf welche hierin Bezug genommen wird.

Erfindungsgemäß besteht das optische Element aus zumindest einem Kunststoff mit den Strukturelementen ausgewählt aus der Gruppe der Sulfone und/oder Sulfide und/oder Ether und/oder Ester und/oder Ketone und/oder Imide. Als Strukturelement wird im Rahmen der Erfindung der Bestandteil des Polymers verstanden, der bei der Verknüpfung der Monomeren entsteht oder maßgeblich beteiligt ist und somit zur Beschreibung geeignet ist. Erfindungsgemäß sind die Strukturelemente mit vorzugsweise aromatischen Systemen verknüpft ist, wobei aromatische Systeme cyclische Verbindungen mit konjugieren Doppelbindungen sind, welche ferner beliebige Substituenten umfassen können. Bekannte aromatische Systeme sind beispielsweise Benzol und Phenol. Andere die Strukturelemente verbindende Systeme sind allerdings ebenfalls denkbar und von der Erfindung umfasst.

Die vorbekannten hochtemperaturbeständigen Kunststoffe sind häufig schon im Auslieferungszustand gelb- oder braunstichig, d.h. sie weisen eine gelbliche oder bräunliche Eigenfärbung auf. Dies bedeutet, dass sie üblicherweise Rₐ-Werte von kleiner als 90 aufweisen. Die Erfinder haben erkannt, dass sehr gute Werte für den Farbwiedergabe-Index Rₐ dadurch erreicht werden können, dass bei der Herstellung der Kunststoffe hochreine Ausgangsprodukte verwendet werden. Die Eigenfärbungen werden demnach anscheinend durch Verunreinigungen der Grundstoffe hervorgerufen, oder aber auch durch ungewollte Reaktion bei der Polymerisation, beispielsweise Oxidationen oder sonstige Nebenreaktionen, die auch durch Verunreinigungen bedingte radikalische Mechanismen unterstützt werden können.

Bevorzugt wird der Kunststoff eines erfindungsgemäßen optischen Elements durch Polykondensation gewonnen. Eine Polykondensation ist eine stufenweise über stabile, aber weiterhin reaktionsfähige Zwischenprodukte ablaufende Kondensationsreaktion, bei der aus vielen niedermolekularen Stoffen (Monomere) unter Abspaltung einfach gebauter Moleküle Makromoleküle (Polymere und/oder Copolymere) gebildet werden. Ein durch Polykondensation gewonnener Kunststoff wird im Sinne dieser Erfindung Polykondensat oder auch Kondensationspolymer genannt.

Im Sinne der Erfindung ist es auch möglich, dass das erfindungsgemäße optische Element überwiegend aus einer Mischung von Kunststoffen hergestellt wird, welche die vorgenannten Strukturelemente aufweisen. Das Mischen kann vorteilhaft sein, um Eigenschaften des optischen Elements anzupassen. Dies können insbesondere mechanische Eigenschaften wie Zähigkeit und/oder Schlagfestigkeit sein, aber auch Beständigkeit gegenüber ultravioletter Strahlung, Angriff von Säuren und/oder Laugen, aber auch Wasser.

Bevorzugt sind die Kunststoffe Thermoplasten, weil dadurch kostengünstige Verarbeitungsmethoden mit hohen Freiheitsgraden bzgl. des Designs ermöglicht werden.

Besonders bevorzugt ist das erfindungsgemäße optische Element ebenso flammfest gemäß den Testnormen ABD0031 und JAR/FAR 25.853a (App. F Part I und II) JAR/FAR 25.869.

Im Rahmen der Auswahl der vorgenannten Gruppe von Kunststoffen enthält der Kunststoff des erfindungsgemäßen optischen Elements bevorzugt Polysulfon. Dieses weist schematisch die Strukturformel 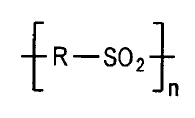 auf, wobei SO₂ das zuvor beschriebene Strukturelement repräsentiert. R ist in der Erfindung ein beliebiger Rest, welcher bevorzugt ein ebenfalls zuvor beschriebenes aromatisches System umfassen kann. Nicht-cyclische Reste auch mit weniger Kohlenstoffatomen sind allerdings ebenso möglich. Der Index n verdeutlicht, dass sich in dem Kunststoff die Sequenz der prinzipiellen Strukturformel wiederholt. Typischerweise nimmt n Werte von 20 bis 1000 an. Der Aggregatzustand des Kunststoffes ist, wenn er als erfindungsgemäßes optisches Element verarbeitet ist, bevorzugt fest.

Ebenso bevorzugt enthält der Kunststoff des erfindungsgemäßen optischen Elements Polysulfid entsprechend der schematischen Strukturformel 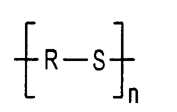 enthält. Das Strukturelement wird hierbei durch das Element S verkörpert.

Ebenso bevorzugt enthält der Kunststoff des erfindungsgemäßen optischen Elements Polyether entsprechend der schematischen Strukturformel 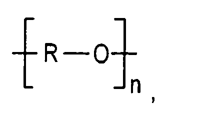 wobei hierbei das Strukturelement durch das Element O repräsentiert wird.

Der Kunststoff des erfindungsgemäßen optischen Elements enthält ebenso bevorzugt Polyarylat entsprechend der schematischen Strukturformel 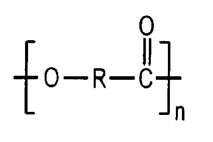 und/oder entsprechend der schematischen Strukturformel

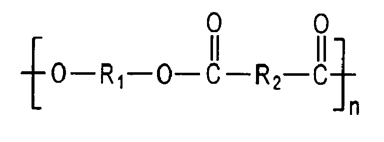

Diese Polyarylate gehören zu der Gruppe der Ester. Das Strukturelement ist dabei durch -O-R-C=O bzw. -O-R₁-O-C=O repräsentierbar. R₁ und R₂ stehen im Sinne der Erfindung stellvertretend für den vorgenannten Rest R, wobei R₁ und R₂ gleiche oder unterschiedliche Reste sein können. Davon sind auch alle denkbaren Isomere umfasst.

Der Kunststoff des erfindungsgemäßen optischen Elements enthält ebenso bevorzugt Polyketon entsprechend der schematischen Strukturformel 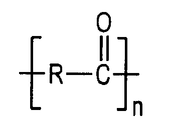 wobei das Strukturelement durch -C=O dargestellt werden kann.

Der Kunststoff des erfindungsgemäßen optischen Elements enthält ebenso bevorzugt Polyimid, welches bevorzugt die schematische Strukturformel 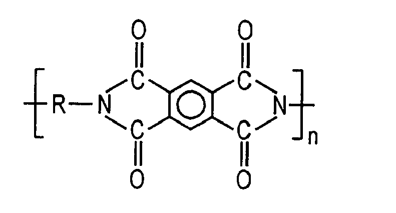 aufweist und/oder die schematische Strukturformel

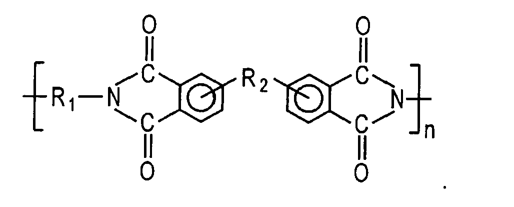

Das Strukturelement kann hierbei repräsentiert werden durch R-C(O)-NR-C(O)-R, wobei C(O) eine Carbonylfunktion darstellen soll.

Der Kunststoff des erfindungsgemäßen optischen Elements enthält ebenso bevorzugt Polyethersulfon, bevorzugt entsprechend der schematischen Strukturformel 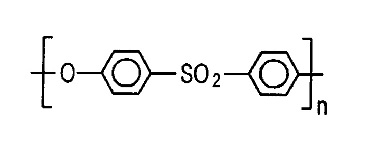 mit dem möglichen Strukturelement O-R-SO₂-R und/oder Polysulfon bevorzugt entsprechend der schematischen Strukturformel 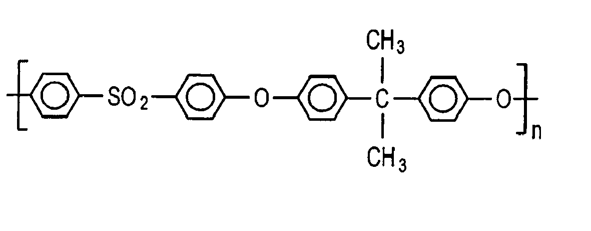 mit dem möglichen Strukturelement SO₂-R-O-R-C(CH₃)₂-R-O, wobei C(CH₃)₂ eine Dimethylguppe darstellen sollen.

Ebenso bevorzugt enthält der Kunststoff des erfindungsgemäßen optischen Elements Polyarlyethersulfon, bevorzugt entsprechend der schematischen Strukturformel

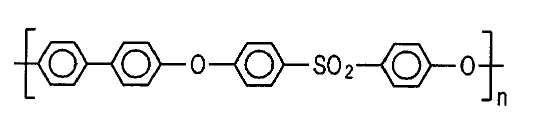

Das Strukturelement kann dabei durch R-O-R-SO₂ repräsentiert werden.

Der Kunststoff des erfindungsgemäßen optischen Elements enthält ebenso bevorzugt Polyetherimid, bevorzugt entsprechend der schematischen Strukturformel 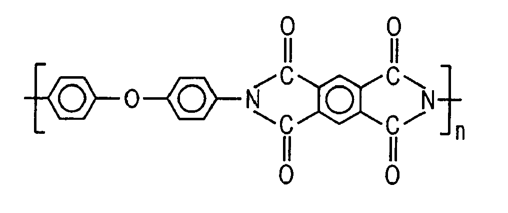 mit dem möglichen Strukturelement O-R-C(O)-NR-C(O)-R.

Ebenso bevorzugt enthält der Kunststoff des erfindungsgemäßen optischen Elements Polyetherketon, bevorzugt entsprechend der schematischen Strukturformel 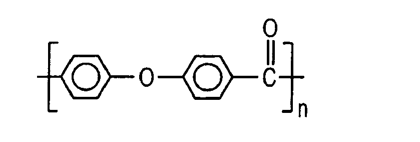 enthält, und/oder entsprechend der schematischen Strukturformel

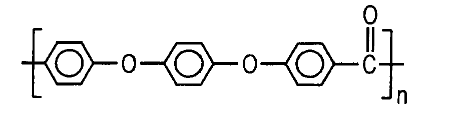

Die Strukturelemente können dabei durch O-R-C=O und/oder O-R-O-R-C=O dargestellt werden.

Ebenso bevorzugt enthält der Kunststoff des erfindungsgemäßen optischen Elements Polyestercarbonat, bevorzugt aus der Gruppe der Poylarylat-Copolymere, bevorzugt entsprechend der schematischen Strukturformel

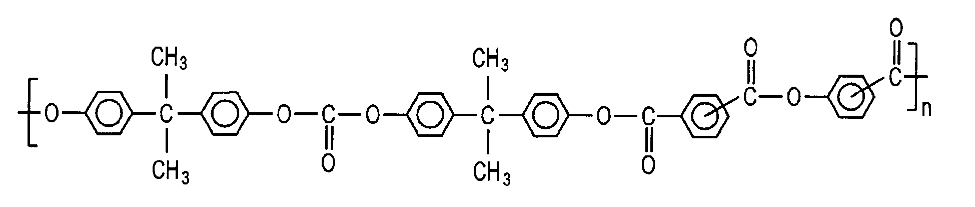

Es ist zu betonen, dass alle Derivate und Isomere der schematisch dargestellten Verbindungen ebenso von der Erfindung umfasst sind. Auch Mischungen der genannten Verbindungen innerhalb der ausgewählten Gruppe von Verbindungen sind von dem Erfindern vorgesehen.

Wenn Polysulfid als Bestandteil des erfindungsgemäßen optischen Elements verwendet wird, beinhaltet der Rest R besonders bevorzugt Para-Phenylen, so dass das Polysulfid durch die schematische Strukturformel 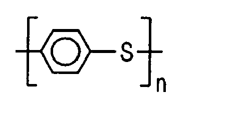 dargestellt werden kann.

Neben dem Farbwiedergabeindex ist der Gelbwert (Yellowness-Index) eine anerkannte Maßzahl zur Bewertung des optischen Eindrucks von Materialien. Ein möglichst kleiner Gelbwert ist erstrebenswert. Das Testverfahren ist ausführlich in DIN 6167 beschrieben, auf welche hierin Bezug genommen wird. Das erfindungsgemäße optische Element zeichnet sich bevorzugt auch durch einen geringen Gelbwert von kleiner als 10 auf, bevorzugt kleiner als 5 und besonders bevorzugt kleiner als 2, jeweils gemessen an einer im wesentlichen planaren Scheibe aus einem der genannten Kunststoffe mit einer Dicke von 4 mm.

Die bezüglich des Farbwiedergabe-Index Rₐ beschriebene vornehmlich gelbliche oder bräunliche Eigenfärbung der vorbekannten Kunststoffe macht sich in einem Transmissionsspektrum auch durch eine verminderte Transmission im violetten Spektralbereich bemerkbar. Aus diesem Grunde weisen die erfindungsgemäßen optischen Elemente bei einer Wellenlänge von 380 nm einen spektralen Transmissionsgrad T von mindestens 85% auf, gemessen an einer im wesentlichen planaren Scheibe mit einer Dicke von 2 mm hergestellt aus den ausgewählten Kunststoffen. Weil auf die Referenzprobe bei der Messung verzichtet wird, wirkt die Reflektion an den Grenzflächen der zu vermessenden Probe transmissionsmindernd. Diese Reflektion ist allerdings nicht wesentlich für die Eigenfärbung des optischen Elements.

Der Transmissionsgrad T bezeichnet den Anteil der durch ein Objekt durchgelassenen Strahlung. Bei dem Durchgang tritt immer eine Abschwächung auf, die sich im Allgemeinen aus Absorption, Streuung, Beugung und Reflexion zusammensetzt und wellenlängenabhängig ist. Die Bestimmung des Transmissionsgrades T erfolgt üblicherweise mit Hilfe eines Spektralphotometers. Für die Bestimmung von T wird im Rahmen dieser Erfindung auf eine Vergleichsprobe im Referenzstrahlengang verzichtet und die Transmission bei der gewünschten Wellenlänge gemessen.

Es ist von Vorteil, wenn ein erfindungsgemäßes optisches Element im sichtbaren Spektralbereich, der sich in etwa in einem Wellenlängenbereich von 380 nm bis 750 nm erstreckt, ein möglichst gleichmäßiges Transmissionsprofil aufweist. Dies bedeutet, dass der Spektrale Transmissionsgrad T bei diesen Wellenlängen möglichst einen gleich hohen Wert annimmt. Gelbliche Eigenfärbungen können aber insbesondere auch verminderte Transmissionen im blauen Spektralbereich zur Folge haben. Aus diesem Grund weist ein erfindungsgemäßes optisches Element im blauen Spektralbereich bei einer Wellenlänge von 450 nm besonders bevorzugt einen Transmissionsgrad T von mindestens 88% auf, wiederum gemessen wie zuvor beschrieben.

Der in einem erfindungsgemäßes optisches Element enthaltende Kunststoff weist ferner bevorzugt einen Brechungsindex n_{D} bei einer Wellenlänge von 550 nm auf, der im wesentlichen 1,65 beträgt. Die Definition des Brechungsindex ist dem Fachmann für optische Elemente bekannt und wird daher nicht weiter ausgeführt. Je höher der Brechungsindex ist, desto höher ist die Brechkraft des Elements. Dies bedeutet, dass bei einer Anwendung, bei der es auf die Lichtbrechung ankommt, weniger Material benötigt wird, so dass die Bauhöhe des optischen Elements und/oder sein Gewicht im Vergleich zu optischen Elementen aus Materialen mit geringeren Brechungsindices kleiner ausfallen kann. Plexiglas (PMMA) weist beispielsweise einen Brechungsindex von 1,49 auf und Cycloolefin-Copolymere (COC) einen von 1,533. Wird das erfindungsgemäße optische Element beispielsweise als Linse ausgeformt, muss aufgrund des höheren Brechungsindex des erfindungsgemäßen Elements die Krümmung der Linse weniger stark sein als beispielsweise eine Linse aus PMMA, um die gleiche Brennweite zu erhalten. Dadurch ist die Linse kompakter und eröffnet die Möglichkeit, die Linse enthaltende Endgeräte kompakter und damit auch leichter zu bauen. Insbesondere für Anwendungen in Flugzeugen ist dies ein beträchtlicher Vorteil.

Ferner ist es von Vorteil, wenn ein erfindungsgemäßes optisches Element einen möglichst geringen thermischen Ausdehnungskoeffizienten aufweist. Der thermische Ausdehnungskoeffizient ist ein Kennwert, der die prozentuale Größen-, genauer die Längenänderung, in Abhängigkeit von der Temperaturänderung beschreibt. Je größer der thermische Ausdehnungskoeffizient ist, desto mehr Längenänderung tritt ein. Dies ist insbesondere bei Bauteilen ein Problem, welche starken Temperaturschwankungen ausgesetzt sind. Solche Bauteile sind insbesondere Flugzeugfenster. Jegliche Längenänderung des Material muss durch die Rahmenkonstruktion berücksichtigt werden, um die notwendige Druckdichtigkeit des Fensters zu gewährleisten. Daher weist ein erfindungsgemäßes optisches Element einen thermischen Ausdehnungskoeffizienten auf, der im wesentlichen 50·10⁻⁶ K⁻¹ beträgt. Der thermische Ausdehnungskoeffizient von Plexiglas (PMMA) beträgt zum Vergleich 85·10⁻⁶ K⁻¹. Dies bedeutet, dass ein erfindungsgemäßes optisches Element eine signifikant kleinere temperaturbedingte Längenänderung erfährt, was den Einsatz des erfindungsgemäßen optischen Elements als Flugzeugfenster besonders vorteilhaft macht.

Insbesondere in Flugzeugen bestehen besondere Anforderungen bezüglich der Vibrationssicherheit der verwendeten Bauteile. Die Anforderungen sind auch in den Qualifikationsbestimmungen der Flugzeughersteller Boeing und Airbus niedergelegt, insbesondere in der weltweit gültigen Norm der RTCA DO-160 E Section 8 sowie in den Sections 7.2 und 7.3 für Operational Shock und Crash Safety. Die Qualifikationsbestimmungen schreiben vor, welche Materialien und Bauteile überhaupt in den Flugzeugen von den Herstellern zugelassen werden und unterliegen der Kontrolle der mit der Flugsicherheit betrauten Behörden. In diesen Bestimmungen ist ein wesentliches Merkmal, dass die eingesetzten Bauteile so ausgelegt sind, dass sie durch Turbinenschäden bedingte starke Vibrationen, beispielsweise durch beschädigte oder verlustig gegangene Turbinenschaufeln, möglichst unbeschadet widerstehen und nicht ihre strukturelle Integrität verlieren. Die in Flugzeugen verlangte Vibrationssicherheit ist allerdings auch als positive Eigenschaft für den Schiffsbau übertragbar, weil ein Schaden an der Schiffsschraube oder aber auch eine Kollision des Schiffes erhebliche Vibrationen, wenn auch unter Umständen nur kurzfristig, hervorrufen kann und die verwendeten Bauteile auch in solchen Fällen sicher sein sollen. Deshalb ist ein erfindungsgemäßes optisches Element besonders bevorzugt nach den oben genannten Testnormen.

Für den Test werden die entsprechenden Applikationen auf sogenannte Shaker befestigt. Je nach Einbaulage wird die ungünstigste Position gewählt und das Gerät nach den einzelnen nach den Normen festgelegten Frequenzkurven nach deren Beständigkeit getestet. Überprüft wird vor allem auch, ob während des Abfahrens der Frequenzkurven eventuelle Resonanzschwingungen auftreten, die eine Beschädigung des Gerätes oder dessen Befestigung verursachen.

Um die gewünschten Eigenschaften zu erreichen, kann es von Vorteil sein, wenn den Kunststoffen der erfindungsgemäßen optischen Elemente Füllstoffe, Verstärkungsstoffe oder Effektstoffe beigemischt werden. Diese können in einer Menge von bis zu 30 Gewichtsprozent dem Kunststoff beigemischt sein. Bevorzugt wird ein Füllstoff und/oder ein Füllstoffgemisch verwendet, welcher bzw. welches TiO₂ enthält. Füllstoffe und/oder Verstärkungsstoffe können insbesondere die mechanischen Eigenschaften des Kunststoffs verbessern. Elastomere als Füllstoffe können beispielsweise die Vibrationsfestigkeit des Kunststoffs und somit des optischen Elements verbessern. Durch die Zugabe von transparenten Partikeln als Effektstoffe, bevorzugt mit einer von der Matrix abweichenden Brechzahl, können beispielsweise die Zähigkeit und/oder die lichtleitenden und lichtstreuenden Eigenschaften des Kunststoffs gezielt beeinflusst werden. Mit farbigen Effektstoffen können der Gesamteindruck und/oder das Transmissions- und/oder Rückstreuverhalten des optischen Elements eingestellt werden, beispielsweise um die Wahrnehmung von Farbkontrasten zu unterstützen. Die in den Ansprüchen genannten optischen Eigenschaften des optischen Elements beziehen sich allerdings immer auf ein optisches Element, in dessen Kunststoff kein Füll-, Verstärkungs- und/oder Effektstoffen zugegeben wurde.

Kunststoffe können bei der Bestrahlung mit Licht im ultravioletten Spektralbereich (UV), welcher sich in etwa in einem Wellenlängenbereich von 100 nm bis 400 nm erstreckt, allerdings beschädigt werden. Weil insbesondere die konjugierten Doppelbindungen des oftmals vorhandenen aromatischen Systems UV-Licht absorbieren, kann der dadurch bedingte Energieeintrag zu Brüchen in der Struktur des Kunststoffs führen. Dies kann sich beispielsweise durch Rissbildungen, Trübungen und Verfärbungen des Materials bemerkbar machen. Um die optischen Elemente beständiger gegenüber den Wirkungen des UV-Lichts zu machen, können dem Kunststoff UV-absorbierende Füllstoffe zugegeben werden. Besonders bevorzugt ist ein erfindungsgemäßes optisches Element allerdings mit einer UV-Schutzschicht beschichtet. Die UV-Schutzschicht reflektiert entweder das einfallende UV-Licht oder absorbiert dieses möglichst vollständig innerhalb der Schicht, so dass die schädliche UV-Strahlung den Kunststoff erst überhaupt nicht oder nur in möglichst geringen Mengen erreicht.

Die Beschichtung kann durch die üblichen Verfahren hergestellt sein, beispielsweise durch Tauchbeschichtung, Sprühen, Laminieren, Kaschieren, Galvanisieren, Sputtern, physikalischer Dampfphasenabscheidung und allen weiteren dem Fachmann bekannten Verfahren. Bei der Verwendung eines erfindungsgemäßen optischen Elements als Flugzeugfenster ist besonders bevorzugt die äußere Seite des Außenfensters mit einer solchen UV-Schutzschicht versehen.

Aufgrund der besonderen Eigenschaften der erfindungsgemäßen optischen Elemente können sie in vielen Anwendungen eingesetzt werden. Bevorzugt werden sie allerdings innerhalb von Flugzeugkabinen oder in den Innenräumen von Schiffen eingesetzt, beispielsweise in der Lobby, den Speisesälen und in den Kabinen der Passagiere und der Mannschaft, oder aber in Architekturanwendungen. In letzteren insbesondere dort, wo erhöhte Anforderungen an die Flammfestigkeit gestellt werden. Dies können beispielsweise Labore und Arbeitsbereiche sein, aber auch Hotels, Geschäftshäuser und Einkaufszentren sowie private Wohnungen.

Eine bevorzugte Anwendung ist die Verwendung als Fenster in Fahrzeugen jeder Art, insbesondere aber von Flugzeugen oder Schiffen. In der Automobilindustrie ist der Einsatz als Seitenfenster oder als Dachelement und somit als Dachfenster allerdings auch vorteilhaft, wenn das Gewicht des Fahrzeugs reduziert werden kann. Schon heute weisen die Hochleistungssportwagen vieler Hersteller Seitenfenster oder aber auch Dächer aus Kunststoffen auf, um aufgrund der Gewichtsersparnis die Fahrleistungen zu verbessern. Ein geringeres Gewicht der Fahrzeuge kommt allerdings auch der Kraftstoffeinsparung zugute, welche aus wirtschaftlichen und aus Umweltgesichtspunkten auch für die große Masse von Kraftfahrzeugen erstrebenswert ist. Daher sind die erfindungsgemäßen optischen Elemente auch für diese Anwendungen von großem Vorteil.

Ferner können die erfindungsgemäßen optischen Elemente als Raumteiler verwendet werden. Solche Raumteiler können aufgrund ihrer erhöhten Flammfestigkeit bevorzugt in Fahrzeugen, dort insbesondere in Flugzeuginnenräumen, Schiffsinnenräumen und Zügen eingesetzt werden, aber selbstverständlich auch in der Architektur, beispielsweise der Innenarchitektur. In diesen Anwendungsgebieten kann es besonders vorteilhaft sein, wenn das optische Element eingefärbt ist und/oder Partikel beigemischt sind, welche den Raumteiler semitransparent erscheinen lassen. Selbstverständlich sind auch undurchsichtige Raumteiler von dem Erfindungsgedanken umfasst.

Besonders bevorzugt findet das erfindungsgemäße optische Element Anwendung als Projektionsfläche. Dabei werden bewegte und/oder unbewegte Bilder auf das optische Element beispielsweise mittels eines Projektors auf das optische Element gestrahlt, oder aber auch nur Licht verschiedener Farben und/oder starre oder sich bewegende Farbübergänge. Dafür können auch beliebige Beleuchtungsquellen wie zum Beispiel Lichtemittierende Dioden (LEDs) und/oder Scheinwerfer eingesetzt werden. Durch eine solche Projektionsfläche, auf welche verschiedene Farben und/oder Farbübergänge projiziert werden, können in besonders vorteilhafter Weise verschiedene Farbstimmungen in Flugzeuginnenräumen erzeugt werden. Diese können hilfreich sein, um den Passagieren den Übergang in verschiedene Zeitzonen zu erleichtern und/oder einen Schlafrhythmus zu unterstützen. Aufgrund des hohen Brechungsindex des Materials des erfindungsgemäßen optischen Elements ist es dabei noch nicht einmal notwendig, dass lichtstreuende und/oder reflektierende Mittel in das Material oder Beschichtungen auf das aufgebracht werden. Dies bedeutet, dass das optische Element im nicht mit Licht bzw. Bildern bestrahlten Zustand durchsichtig sein kann, und es während der Bestrahlung durch die Bild- und/oder Lichtwiedergabe nicht mehr als durchsichtig erscheint. Diese Eigenschaft ist ebenfalls für die Verwendung als Raumteiler interessant, da der Raumteiler auf einfache Weise eine andere Wirkung erzeugen kann. Besonders vorteilhaft ist diese Anwendung in Flugzeuginnenräumen, bei denen im allgemeinen vorgesehen ist, dass während der Start- und Landephase der Passagierraum durchgehend einsehbar sein soll. Während der Flugphase ist allerdings eine Raumteilung erwünscht, beispielsweise um die Economy- von der Businessklasse optisch abzuteilen. Die Verwendung des erfindungsgemäßen optischen Elements kommt dieser Anwendung auch dadurch entgegen, dass im Gegensatz zu elektrochromen Materialien kein elektrischer Strom benötigt wird, um die Durchsichtbarkeit zu erzeugen, denn gerade in der Start- und Landephase werden möglichst viele Stromverbraucher üblicherweise abgeschaltet. In der Flugphase ist die Versorgung der Projektoren und/oder Lichtquellen mit elektrischem Strom dahingegen kein Problem. Allerdings ist auch für diese Anwendung die Beimischung von geeigneten Stoffen und/oder Stoffgemischen von der Erfindung umfasst.

Eine weitere bevorzugte Anwendung des erfindungsgemäßen optischen Elements ist ein Lichtverteilungskörper. Ein Lichtverteilungskörper ist generell ein Mittel zum Leiten des Lichts von einer Stelle des Lichtverteilungskörpers, in der das Licht eingestrahlt wird, zu mindestens einer anderen Stelle des Lichtverteilungskörpers. Ein Lichtverteilungskörper kann beispielsweise ein Lichtleitstab sein, der entweder starr oder flexibel sein kann, ein Lichtleitfaserbündel und/oder ein Lichtmischer.

In einem Lichtleitstab wird das Licht im allgemeinen in das Lichteintrittsende eingekoppelt und in dem Lichtaustrittsende augekoppelt. Auf diese Weise können beispielsweise mehrere Bauteile mit einer Lichtquelle versorgt werden, wobei die Bauteile mit Hilfe der Lichtleitstäbe verbunden sind. Die Lichtleitung erfolgt durch Totalreflexion des Lichts an der Grenzfläche des Lichtleitstabes zur Luft. Generell ist für die Totalreflextion bekanntermaßen aber nur die Bedingung erforderlich, dass eine Grenzfläche des Lichtleitstabes zu einem Medium mit geringerem Brechungsindex vorhanden sein muss. Daher ist es auch denkbar, dass der Lichtleitstab im speziellen oder aber auch der Lichtverteilungskörper im allgemeinen mit zumindest einer weiteren Schicht ummantelt ist, deren Brechungsindex vorzugsweise kleiner als der des Materials des Lichtverteilungskörpers selbst ist.

Ein Lichtleitfaserbündel erhält man beispielsweise dadurch, dass aus den genannten Kunststoffen Fasern extrudiert werden. Es ist ebenfalls möglich, dass aus den genannten Kunststoffen Preformen hergestellt werden, die dann zu Fasern ausgezogen werden. Die Dicke dieser Fasern beträgt üblicherweise einige Mikrometer bis Millimeter. Werden mehrere dieser Fasern zusammengefasst, spricht man von einem Faserbündel. Bevorzugt ist jede Einzelfaser des Faserbündels mit einem Fasermantel umgeben, der einen geringeren Brechungsindex aufweist als das Material der Einzelfaser. Dadurch kann erreicht werden, dass relativ wenig Übersprechen von Licht von einer Einzelfaser auf die benachbarte Einzelfaser des Faserbündels auftritt, so dass die Dämpfung für die Lichtleitung im Faserbündel gering bleibt und die Einzelfasern unabhängig voneinander Licht leiten können. Lichtleitfaserbündel sind oftmals zum Schutz der Einzelfasern von einem äußeren Kunststoffmantel umgeben.

Es kann aber auch beabsichtigt sein, dass sich das Licht verschiedener Lichtquellen in einem Lichtverteiler mischt. Der Lichtverteilungskörper ist dann ein Lichtmischer. Ein solcher kann beispielsweise dazu dienen, das Licht von verschiedenfarbigen Lichtquellen zu mischen, so dass durch die Farbmischung ein homogenes Licht der gemischten Farbe entsteht. Der Lichtmischer selbst kann wiederum mit weiteren Lichtverteilungskörpern verbunden sein, so dass funktionale Lichtnetzwerke mit Hilfe der erfindungsgemäßen optischen Elemente realisierbar sind.

Auch im Falle des Lichtmischers ist es möglich, dass der Lichtverteilungskörper zumindest teilweise mit einer weiteren Schicht ummantelt ist, welche einen geringeren Brechungsindex aufweist als das Material des Lichtverteilungskörpers. Bei allen Lichtverteilungskörpern ist es aber auch möglich, dass sie für bestimmte Anwendungen zur Verbesserung der Lichtleitung zumindest teilweise außen verspiegelt sind.

Generell kann der Lichtverteilungskörper Licht zu Beleuchtungszwecken oder zu Zwecken der Datenübertragung leiten. Bei der Datenübertragung wird Licht üblicherweise in Form von Pulsen geleitet, wobei die Pulsfolge den kodierten Datensatz repräsentiert. Andere Kodierungsmöglichkeiten wie beispielsweise Amplitudenmodulation sind allerdings auch möglich.

Eine weitere bevorzugte Anwendung des erfindungsgemäßen optischen Elements ist dessen Verwendung als Lichtaustrittskörper. Von einem Lichtaustrittkörper wird im Sinne der Erfindung Licht von den erfindungsgemäßen optischen Elementen in andere Bauteile oder aber auch nur die Umgebung emittiert. In einem einfachen Fall kann ein Lichtaustrittskörper ein Element sein, das als dessen Abschluss an ein Lichtleitfaserbündel angebracht ist und durch beispielsweise der Innenraum eines Flugzeuges beleuchtet wird. Der Lichtaustrittskörper kann in angemessener Form geformt sein, um das Strahlprofil des austretenden Lichts zu formen, beispielsweise aufzuweiten oder zu bündeln.

Ein Lichtaustrittskörper im Sinne der Erfindung ist aber auch ein Lichtleitstab, der in zumindest Teilbereichen seiner Außenfläche mit Mitteln versehen ist, die Licht aus seinem Innern auskoppeln. Solche Mittel können eine aufgerauhte Oberfläche sein, wie sie durch Sandstrahlen oder Ätzen entstehen kann. Die aufgerauhte Oberfläche enthält eine Vielzahl von Bereichen, welche als Streuzentrum dienen. Für einen Betrachter wirkt ein solcher Lichtleitstab so, als würde seine Oberfläche leuchten. Auf diese Weise lassen sich dekorative Lichteffekte erzielen, welche für die Gestaltung von Flugzeuginnenräumen, dem Darstellen von Sicherheitshinweisen wie der Markierung von Fluchtwegen sowie für allgemeine Designzwecke vorteilhaft sein können.

Eine besonders bevorzugte Verwendung des erfindungsgemäßen optischen Elements als Lichtaustrittskörper ist ein Leuchtpanel. Bei einem Leuchtpanel liegt das erfindungsgemäße optische Element im wesentlichen in Form einer Scheibe vor, die allerdings in alle Ebenen verformt sein kann, wobei in die Kantenflächen der Scheibe Licht eingekoppelt werden kann. Die Scheibe wirkt dabei sowohl als Lichtleiter als auch als Lichtmischer. Die Lichteinkopplung kann mittels eines oder einer Mehrzahl von Faserbündeln erfolgen, aber auch durch zumindest in unmittelbarer Nähe der Kantenflächen angebrachte LEDs. Das eingekoppelte Licht kann an jeder beliebigen Stelle der Oberfläche der Scheibe durch das Anbringen von Streuzentren ausgekoppelt werden. Die Streuzentren werden bevorzugt durch die zuvor beschriebenen Methoden zum Aufrauhen erzeugt. Dabei ist ebenso eine strukturierte Anbringung der Streuzentren möglich, beispielsweise durch Maskierungstechniken, so dass sich auf dem Leuchtpanel statische Bildinformationen wie beispielsweise Logos und/oder alphanumerische Zeichen wie beispielsweise Hinweise und/oder Beschreibungen anbringen lassen.

Neben dem Aufrauhen sind auch die Anwendung aller anderen Methoden im Sinne der Erfindung möglich, um eine Lichtauskopplung aus dem optischen Element zu erreichen. Beispielsweise können in die Oberfläche des optischen Elements Strukturen eingebracht sein, die in die Oberfläche hineinragen und/oder aus ihr herausstehen können. Die Form dieser Strukturen ist bevorzugt prismenförmig. Diese Strukturen können auf einfache Weise durch Prägetechniken erzeugt werden, aber andere Herstellungsmethoden wie Ätzen alle weiteren Methoden hergestellt werden.

Leuchtpanels haben den Vorteil, dass sie aufgrund der Kanteneinkopplung eine sehr geringe Bauhöhe und beliebig gewölbte Oberflächen aufweisen können. Ganz besonders bevorzugt finden Leuchtpanels daher als Elemente der Innenraumverkleidung von Flugzeugkabinen Anwendung. Durch diese kann durch das Einkoppeln von mehrfarbigen Lichtquellen auf einfache Weise eine Ambience-Beluchtung erzielt werden, in der Farbeffekte nicht nur ästhetischen Aufgaben erfüllen, sondern auch das Wohlbefinden der Passagiere durch Unterstützen des Schlaf- und Wachrhythmus mittels angepasster Farbwechsel steigern.

Eine besondere Anwendungsform von Leuchtpanels allerdings sind Lichtleitplatten, welche in Flachbildschirmen verbaut werden. Diese sind in solchen Bildschirmsystemen ein wichtiges Bauteil, die eine Hintergrundbeleuchtung benötigen. Solche sind beispielsweise LCD- und TFT-Bildschirme. In die Lichtleitplatten, englisch auch Lightguideplate genannt, wird von zumindest einer Lichtquelle Licht eingekoppelt und großflächig verteilt. Die Oberfläche der Lichtleitplatte ist üblicherweise mit Mitteln zum Auskoppeln von Licht versehen, beispielsweise Streuzentren oder Strukturen in Form von Mikroprismen. Bisher bestehen die Lichtleitplatten von Flachbildschirmen, die in Flugzeugen eingebaut werden, beispielsweise in den Rückenlehnen von Passagiersitzen, aus PMMA, welches relativ leicht brennbar ist. Um den Passagieren immer umfangreichere Unterhaltungsmöglichkeiten zu bieten, wird dies von den Flugzeugherstellern und den Fluggesellschaften bisher akzeptiert. Mit dem erfindungsgemäßen Einsatz der optischen Elemente als Lichtleitplatte für Flachbildschirme wird es allerdings möglich, auch diese Bauteile entsprechend der strengeren Brandsicherheitsbestimmungen auszulegen. Gerade in Hinblick auf die immer größer werdenden Bildschirme und Passagierflugzeuge, in denen bisher eine beträchtliche Menge von PMMA verbaut ist, kann durch die Erfindung ein wesentlicher Beitrag zur Sicherheit der Passagiere geleistet werden.

Gleiches gilt, wenn das erfindungsgemäße optische Element als Abdeckung von Bildschirmen eingesetzt wird, wobei es als Lichtaustrittskörper wirkt.

Eine weitere bevorzugte Verwendung des optischen Elements ist die Abdeckung von Lichtquellen, beispielsweise Lampen, aber insbesondere von LEDs. Auch hierbei ist das optische Element im Prinzip eine Lichtaustrittskörper. Dabei kann das optische Element zu Zwecken der Strahlformung beliebig geformt sein, beispielsweise linsenförmig. Weil es aus Kunststoff besteht, ist die Herstellung solcher Formen besonders einfach und kostengünstig möglich. Durch die Auswahl entsprechender Effektstoffe ist auch eine gezielte Beeinflussung des emittierten Lichtspektrums erreicht werden. Fluoreszierende und/oder phosphoreszierende Effektstoffe können beispielsweise dazu benutzt werden, dass das optische Element als Konverter von Weißlicht-LEDs dient.

Ebenso bevorzugt wird das erfindungsgemäße optische Element als beleuchtbares Gewebe verwendet. Dazu werden Fasern aus den genannten Kunststoffen miteinander verwebt, wobei spezielle Webverfahren zum Einsatz kommen können. Wird in die Fasern des Gewebes Licht eingeleitet, dienen die Fasern als Lichtleiter. An den Faserenden kann das Licht ausgekoppelt werden. Liegen Faserenden auf der Fläche des Gewebes, sind einzelne Lichtpunkte auf und/oder in dem Gewebe erkennbar. Es können aber auch gezielt Lichtaustrittsstellen in und/oder auf der Gewebeoberfläche geschaffen werden, beispielsweise durch Aufrauhen und/oder anschleifen der Fasern. Auf diese Weise kann das Gewebe flächig leuchtend wirken. Solche Gewebe können beispielsweise als Bezüge von Sitzen oder aber auch selbstleuchtende Vorhänge und/oder Wandbespannungen dienen.

Mit der geeigneten Auswahl der beschriebenen Verwendungsmöglichkeiten eröffnet sich weiterhin in vorteilhafter Weise die Möglichkeit, mit den erfindungsgemäßen optischen Elementen funktionale Lichtnetzwerke insbesondere für Beleuchtungszecke einrichten zu können, welche ästhetische, psychologische und physiologische Aufgaben erfüllen können.

Werden die erfindungsgemäßen optischen Elemente als Spiegelträger verwendet, können sie die in Flugzeugen verwendeten polierten Aluminiumplatten ablösen. Dazu wird auf die dem Benutzer abgewandte Seite des optischen Elements eine spiegelnde Fläche aufgebracht, so dass das von dem Benutzer von der spiegelnden Fläche reflektierte Licht durch das optische Element hindurchtritt. Die spiegelnde Fläche kann durch alle geeigneten Verfahren aufgebracht werden. Am gebräuchlichsten sind Bedampfen, Flüssigbeschichten oder das Bekleben mit einer spiegelnden Folie.

Die Erfindungen wird weiterhin anhand der Zeichnungen und der Ausführungsbeispiele erklärt.

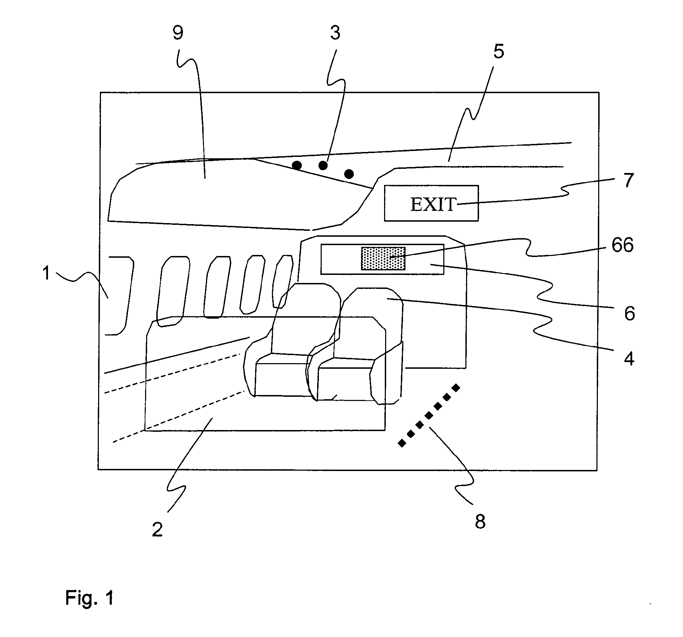

Figur 1 stellt den Innenraum eines Flugzeuges dar. Das Fenster (1) repräsentiert eine bevorzugte Verwendung des erfindungsgemäßen optischen Elements. Es kann eine inneren und einer äußeren durchsichtigen Scheibe beinhalten, welche durch einen geeigneten Rahmen zusammengehalten werden. Der Raumteiler (2) kann den Innenraum gestalterisch unterteilen. Insbesondere kann er aber dazu dienen, die verschiedenen Beförderungsklassen voneinander zu trennen. Bevorzugt ist der Raumteiler (2) transparent. An der Decke des Flugzeuginnenraums sind Lichtaustrittskörper (3) vorgesehen, welche den Gang beleuchten. Diese können in der Form von Linsen ausgebildet sein, um gezielt den Boden des Ganges zu beleuchten und ansonsten die Passagiere nicht zu blenden. Die optische Sitzabdeckung (4) kann so ausgeführt sein, dass entweder die Konturen des Sitzes oder die Sitz-, Armlehnen- und/oder Rückenfläche des Sitzes beleuchtet sind. Dazu wird bevorzugt ein Gewebe von einzelnen Lichtleitfasern verwendet, das mit einer Schutzfolie versehen oder aber auch mit anderen Stoffen verwebt sein kann. In dem Deckenelement (5) können eine Vielzahl Lichtaustrittskörpern angebracht sein, welche als Endstücke das Licht von faseroptischen Lichtleitern auskoppeln. Diese Beleuchtungsart ist als Sternenhimmel auch in Architekturanwendungen bekannt. In der Regel weisen die Lichtaustrittskörper einen Durchmesser von etwa 1 mm auf und es werden ca. 100 Lichtaustrittkörper pro Quadratmeter Fläche angebracht, um einen ästhetisch ansprechenden Sternenhimmeleffekt zu erzielen. In der Wand ist das Leuchtpanel (6) angebracht. Bei entsprechender Leistung der eingekoppelten Lichtleistung kann dieses Leuchtpanel (6) der Beleuchtung der Kabine dienen, bei einer reduzierten Leistung der Lichtquellen aber auch dekorative Funktionen ausüben. In das Leuchtpanel (6) kann ebenfalls ein Bildschirm (66) integriert sein, bei dem das optische Element als Abdeckung und/oder als Lichtleitplatte dient. Es ist ebenso möglich, dass der Bildschirm (66) an jeder beliebigen geeigneten Stelle des Flugzeuginnenraums angebracht ist. Das Hinweisschild (7) kennzeichnet in diesem Beispiel einen Notausgang und wird ebenfalls durch ein Leuchtpanel gebildet. Die Buchstaben können leuchtend ausgeführt sein, wobei die Fläche des Leuchtpanels in Form der Buchstaben strukturiert wurden, oder aber auch nichtleuchtend, wobei das Leuchtpanel flächig leuchtet und die Buchstaben aufgedruckt oder mit Hilfe einer Folie aufgebracht sind. Im Boden sind Leuchtstreifen (8) eingelassen, welche den Weg zu dem Notausgang kennzeichnen. Solche Fluchtwegmarkierungen sind in Flugzeuginnenräumen vorgeschrieben und müssen auch bei starker Raucheinwirkung noch sichtbar sein. Das Deckenelement (9) ist als gewölbtes Leuchtpanel ausgeführt. Mit ihm lassen sich bevorzugt Ambience-Beleuchtungen realisieren und Farbwechsel im Flugzeuginnenraum darstellen.

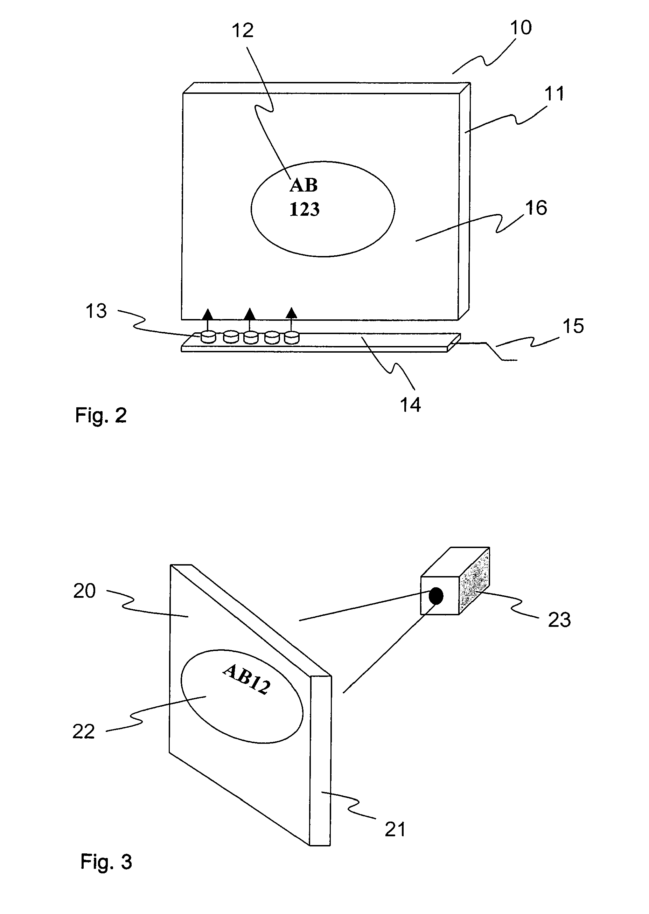

Figur 2 zeigt den Schematischen Aufbau eines Leuchtpanels (10). In die Kanten (11) wird das Licht von LEDs (12) eingekoppelt, wobei die LEDs (13) bevorzugt auf einem Printed Circuit Board (14) befestigt sind. Durch das Printed Circuit Board (14) kann die Stromzufuhr der LEDs auf einfache Art und Weise hergestellt werden. Insbesondere kompliziertere Schaltungen, die bei einer Ansteuerung von farbigen LEDs zum Herstellen von gewünschten Mischfarben erforderlich sind, lassen sich so ökonomisch realisieren. Das Printed Circuit Board (14) kann mittels normaler Kabel- oder Drahtverbindungen (15) mit einer Stromquelle verbunden sein. Auf dem Leuchtpanel (10) kann ein Bereich (12) vorgesehen sein, auf welchem statische Bildinformationen wie Logos und/oder alphanumerische Zeichen sichtbar sind. Diese werden durch Strukturierung des Bereichs (12) erzeugt und sind dann leuchtend oder bei uniform leuchtender Leuchtfläche (16) durch zumindest eine Schicht eines nicht oder zumindest weniger durchscheinenden Materials, wobei die Informationsdarstellung in diesem Fall selbst nichtleuchtend ist.

In Figur 3 ist die Verwendung des optischen Elements als Projektionsfläche (20) dargestellt. Ein Projektor (23) bestrahlt zumindest einen Bereich (22) der Projektionsfläche (20). Der Bereich (22) kann auch mit lichtstreuenden Partikeln versehen oder aufgerauht sein, um das projizierte Licht besser reflektieren bzw. streuen zu können und damit seine Wahrnehmbarkeit zu erhöhen. Es ist ebenfalls möglich, dass in die Oberfläche der Projektionsfläche (20) Strukturen eingebracht sind, beispielsweise in Form von Mikroprismen. Dargestellt werden können statische sowie bewegte Bilder und/oder alphanumerische Zeichen. Da gemäß dem aktuellen Stand der Technik Projektoren (23) verfügbar sind, welche sich mittels Computern ansteuern lassen, sind der Variabilität und Möglichkeiten der Darstellungen kaum Grenzen gesetzt. Allerdings sind auch Projektionen nur mit Licht und/oder von Farbübergängen möglich, so dass durch die Projektionsfläche (20) auch Ambience-Beleuchtungsanwendungen möglich sind. Ferner sind Kombinationen der Projektionsfläche (20) mit dem Leuchtpanel (10) aus Figur 2 möglich, indem zusätzlich das Licht von LEDs in zumindest eine Kante (21) der Projektionsfläche (20) einkoppelbar ist.

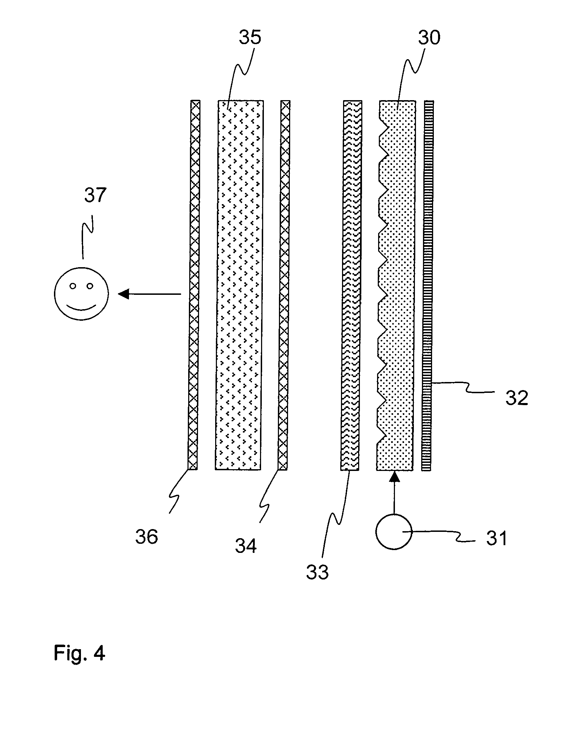

Figur 4 zeigt den schematischen Aufbau eines LCD-Flachbildschirms. In zumindest eine seitliche Kante der Lichtleitplatte (30) wird das Licht der Lichtquelle (31) eingekoppelt. Die Lichtleitplatte (30) ist auf ihrer Rückseite mit einem spiegelnden Element (32) versehen. Dieses kann ein separater Spiegel sein, aber auch eine Beschichtung und/oder Folie. Das eingekoppelte Licht wird auf der Vorderseite, d.h. der dem Benutzer (37) des Flachbildschirms zugewandten Seite der Lichtleitplatte (30), ausgekoppelt. Dazu kann die Lichtleitplatte (30) wie in der Zeichnung dargestellt strukturiert sein, beispielsweise in Form von Mikroprismen. Die Herstellungsmöglichkeiten der Strukturen wurden zuvor beschrieben. Alle weiteren Maßnahmen, um das Licht aus der Oberfläche auszukoppeln, sind ebenso anwendbar. Um den Eindruck einer homogen leuchtenden Fläche zu erzeugen, kann vor der Lichtleitplatte (30) eine Diffusionsplatte (33) vorgesehen sein. Es ist aber auch möglich, dass die Leuchtplatte (30) so ausgebildet ist und/oder die Lichteinkopplung in einer Weise erfolgt, dass die Homogenität der Leuchtfläche gewährleistet ist, dass auf die Diffusionsplatte (33) verzichtet werden kann. Die Elemente (34) bis (36) stellen die LCD-Einheit eines Flachbildschirms dar. LCD steht bekanntermaßen für "Liquid Crystal Display". Die Elemente (34) und (36) sind die Polarisationsfilter, die hier in Form von Platten ausgebildet sind, zwischen dem sich das Flüssigkristall-Anzeigeelement (35) befindet. Der Aufbau von Flachbildschirmen als solches ist aus dem Stand der Technik bekannt und nicht Gegenstand der Erfindung. Vielmehr stellt die Erfindung ein optisches Element bereit, das als Lichtleitplatte (30) und/oder als Abdeckung in Flachbildschirmen verwendet werden kann. Für Flachbildschirme hat der Einsatz des erfindungsgemäßen optischen Elements den Vorteil, dass sie wesentlich brandbeständiger werden können als bisher, so dass sie in Transportmitteln aber auch in Büros, Fabriken, Laboren oder aber auch dem Haushalt einen Beitrag zur Benutzersicherheit leisten können.

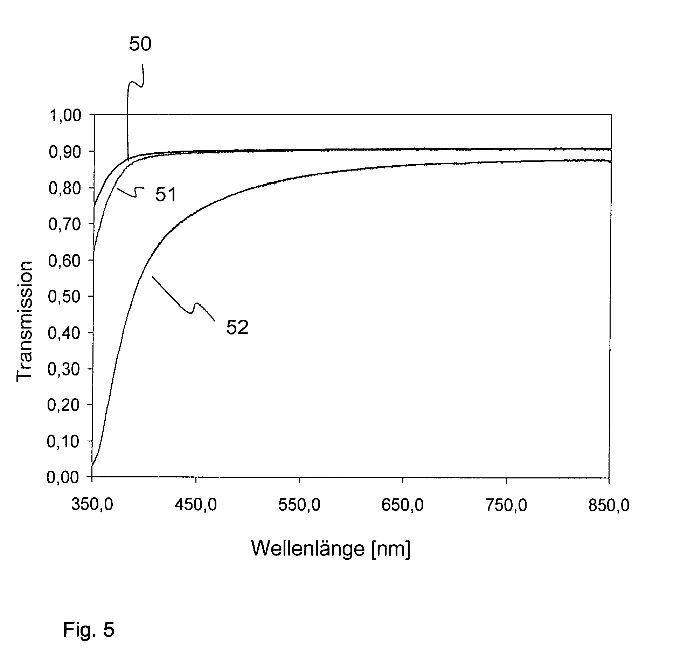

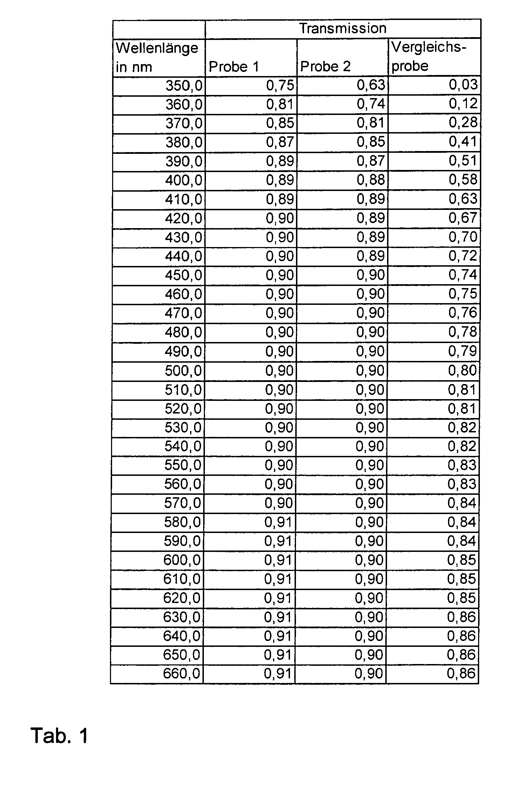

In Figur 5 ist die Transmission von im wesentlichen planaren Platten aus einem Kunststoff dargestellt, der hauptsächlich aus Polyethersulfon besteht, in Abhängigkeit von der Wellenlänge dargestellt. Die Messung erfolgte in einem Spektralphotometer, wobei als Referenzprobe Luft verwendet wurde. Die Kurve (50) zeigt die Transmission einer Platte mit der Dicke 2 mm und Kurve (51) die Transmission einer Platte mit der Dicke 4 mm, beide aus dem Kunststoff Polyethersulfon mit hohem Reinheitsgrad. Aus beiden Platten können die erfindungsgemäßen optischen Elemente hergestellt werden. Kurve (52) repräsentiert den Stand der Technik, nämlich die Transmissionskurve einer Kunststoffplatte der Dicke 4 mm aus dem Kunststoff Polyethersulfon, wie er kommerziell erhältlich ist. Zu bemerken ist, dass die Transmission der Platte aus dem Stand der Technik deutlich unterhalb der Platten liegt, aus denen die erfindungsgemäßen optischen Elemente herstellbar sind. Dass die Kurven (50) und (51) nur eine maximale Transmission von etwas 0,90 erreichen rührt von den Reflektionsverlusten des Analysenlichts innerhalb der Kunststoffplatten sowie von vorhandener intrinsischer Absorption im Kunststoff. Die intrinsische Absorption der reinen Kunststoffe scheint aber gering zu sein, wie an dem geringen Unterschied der Transmissionen der Proben mit der Dicke 2 mm und 4 mm zu sehen ist. Wäre die intrinsische Absorption hoch, müssten die maximalen Transmissionen der Kurven (50) und (51) stärker voneinander abweichen.

Eine solche sehr viel stärkere intrinsische Absorption zeigt allerdings die Probe aus dem Stand der Technik, die als Kurve (52) abgebildet ist. Der Grund für die schlechtere Transmission sind sehr wahrscheinlich Verunreinigungen des Kunststoffs. Die Transmissionskurven aller Proben steigen von dem dargestellten Eingangswert bei einer Wellenlänge von 350 nm auf Maximalwerte der Transmission, welche weiter im roten Spektralbereich liegen. Bei den Proben, die den Kurven (50) und (51) zugrunde liegen, wird ein Plateau mit nahezu konstanter Transmission erreicht, das, bei einer Wellenlänge von etwa 450 nm beginnt. Der Eingangswert der Kurve (52) liegt bedeutend unterhalb der anderen Kurven und es kann kein Plateau mit konstanter Transmission identifiziert werden. Diese Charakteristik der Vergleichsprobe aus dem Stand der Technik (Kurve (52)) zeigt sich auch in einer gelblich-braunen Färbung dieser Probe, für die offensichtlich die schlechtere Transmission gerade im blauen Spektralbereich verantwortlich ist. Ihr Rₐ-Wert liegt bei 96,2 , während die Rₐ-Werte der Proben aus dem reineren Kunststoff mit der Dicke 2 mm und 4 mm (Kurven (50) und (51)) beide 99,6 betragen. Gute Rₐ-Werte beginnen ab 97, besonders bevorzugt ab 98 und ganz besonders bevorzugt ab 99, unabhängig von den vorliegenden Kunststoffen. Der Gelbwert der Vergleichsprobe (Kurve (52)) beträgt 13,0, was für eine deutliche Verfärbung spricht, und derjenige der Proben aus dem reinen Kunststoff bei einer Dicke von 2 mm (Kurve (50)) nur 0,8 bzw. der bei einer Dicke von 4 mm (Kurve (51)) immerhin nur 1,1. Solch niedrigen Gelbwerte der Proben aus dem reinen Kunststoff sind überraschend und unterstreichen, dass diese Materialien für die Herstellung der erfindungsgemäßen optischen Elemente gut geeignet sind.

Tabelle 1 listet die gemessenen Transmissionswerte der vorgenannten Proben in dem Intervall der Wellenlänge von 10 nm. Probe 1 bezeichnet die Probe der Dicke 2mm, die hauptsächlich aus Polyethersulfon besteht und in Figur 5 als Kurve (50) dargestellt ist, Probe 2 die Probe der Dicke 4 mm aus dem gleichen Material, die in Figur 5 als Kurve (51) dargestellt ist und die Vergleichsprobe diejenige Probe der Dicke 4 mm, welche in Figur 5 als Kurve (52) dargestellt ist. Sie besteht wie beschrieben wurde aus dem deutlich verfärbten Kunststoff aus dem Stand der Technik.

Die erfindungsgemäßen optischen Elemente weisen gegenüber bisher verfügbaren optischen Elementen den Vorteil auf, dass sie aus Kunststoff bestehen und damit eine geringes Eigengewicht aufweisen und einfach zu verformen und daher kostengünstig herstellbar sind, verglichen mit optischen Bauteilen aus Glas schon von sich aus hinsichtlich Aspekten des Splitterschutzes sicher und nach den Spezifikationen der führenden Passagierflugzeughersteller vibrationsfest sind. Gegenüber bekannten optischen Elementen aus Kunststoff sind sie brandbeständig nach den für den Luftverkehr gültigen Zulassungsbestimmungen, und weisen sehr gute Werte für den Farbwiedergabe-Index und den Gelbwert auf, was sie erst als optische Elemente geeignet macht. Sie vereinen somit die Vorteile von Glas und klassischen Kunststoffen in sich. Die eröffnet die Möglichkeit zu vielen Anwendungsgebieten, in denen die erfindungsgemäßen optischen Elemente zur Sicherheit ihrer Benutzer beitragen.

## Patentansprüche

**1.** Optisches Element für Bereiche mit erhöhten Brandsicherheitsbestimmungen,
**dadurch gekennzeichnet,**
**dass** der Farbwiedergabe-Index Rₐ bei einer Dicke von 4 mm mindestens 97 beträgt,
**dass** es flammbeständig nach DIN 60332 ist,
und **dass** es überwiegend aus einem Kunststoff mit den Strukturelementen ausgewählt aus der Gruppe der Sulfone und/oder Sulfide und/oder Ether und/oder Ester und/oder Ketone und/oder Imide besteht.

**2.** Optisches Element nach Anspruch 1,
**dadurch gekennzeichnet,**
**dass** der Kunststoff ein Polymer ist, bevorzugt aus der Gruppe der Polykondensaten.

**3.** Optisches Element nach mindestens einem der vorhergehenden Ansprüche,
**dadurch gekennzeichnet,**
**dass** der Kunststoff aus Mischungen von Kunststoffen mit den Strukturelementen nach Anspruch 1 besteht.

**4.** Optisches Element nach mindestens einem der vorhergehenden Ansprüche,
**dadurch gekennzeichnet,**
**dass** der Kunststoff Polysulfon entsprechend der Strukturformel 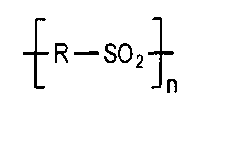 enthält, und/oder der Kunststoff Polysulfid entsprechend der Strukturformel 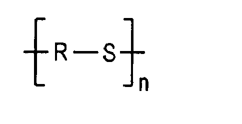 enthält, und/oder der Kunststoff Polyether entsprechend der Strukturformel 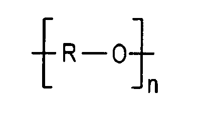 enthält, und/oder der Kunststoff Polyarylat entsprechend der Strukturformel 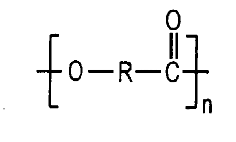 und/oder entsprechend der Strukturformel 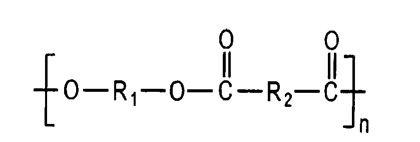 enthält, und/oder der Kunststoff Polyketon entsprechend der Strukturformel 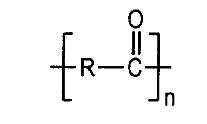 enthält, und/oder der Kunststoff Polyimid enthält, bevorzugt entsprechend der Strukturformel 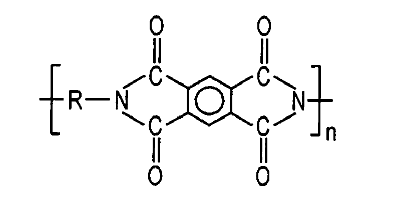 oder entsprechen der Strukturformel 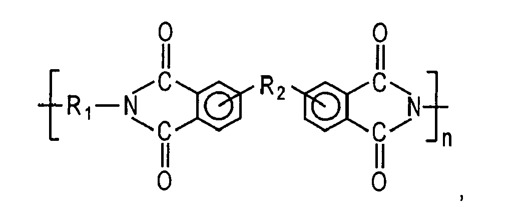 und/oder der Kunststoff Polyethersulfon enthält, bevorzugt entsprechend der Strukturformel 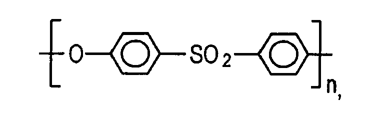 und/oder der Kunststoff Polysulfon enthält, bevorzugt entsprechend der Strukturformel 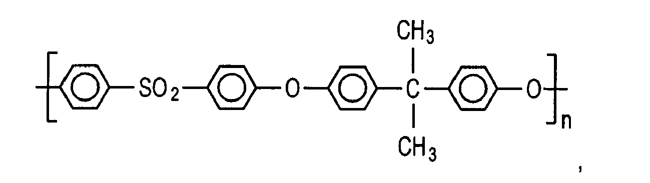 und/oder der Kunststoff Polyarlyethersulfon enthält, bevorzugt entsprechend der Strukturformel 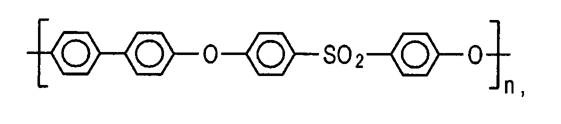 und/oder der Kunststoff Polyetherimid enthält, bevorzugt entsprechend der Strukturformel 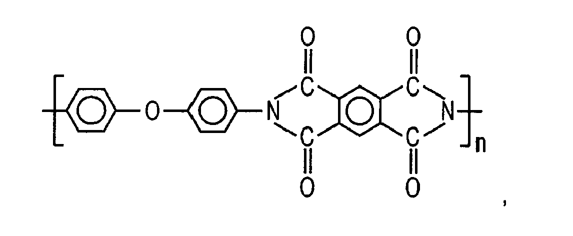 und/oder der Kunststoff Polyetherketon enthält, bevorzugt entsprechend der Strukturformel 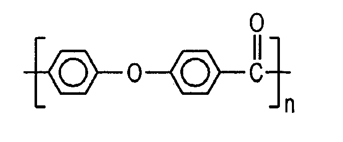 enthält, und/oder der Kunststoff Polyetheretherketon entsprechend der Strukturformel 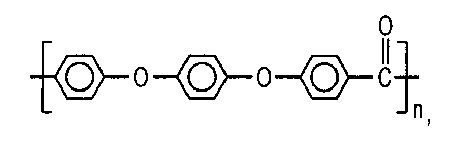 und/oder der Kunststoff Polyestercarbonat enthält, bevorzugt aus der Gruppe der Poylarylat-Copolymere, bevorzugt entsprechend der Strukturformel 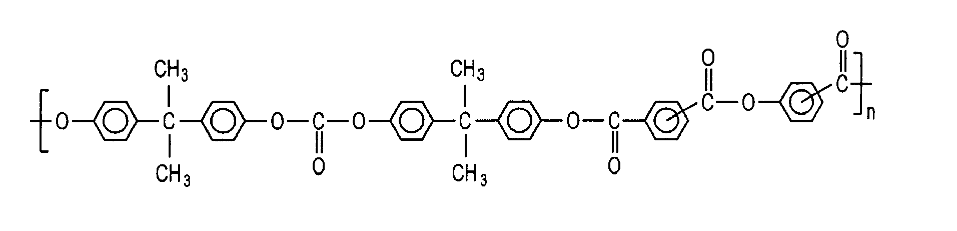 wobei R, R₁ und R₂ jeweils ein aromatisches System beinhalten und n Werte von 20 bis 1000 annehmen kann.

**5.** Optisches Element nach Anspruch 4,
**dadurch gekennzeichnet,**
**dass** der Rest R des Polysulfids Para-Phenylen beinhaltet, so dass das Polysulfid bevorzugt der Strukturformel 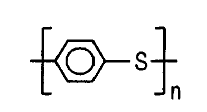 entspricht.

**6.** Optisches Element nach mindestens einem der vorhergehenden Ansprüche,
**dadurch gekennzeichnet,**
**dass** sein Gelbwert nach DIN 6167 bei einer Dicke von 4 mm kleiner als 10 ist, bevorzugt kleiner als 5, besonders bevorzugt kleiner als 2.

**7.** Optisches Element nach mindestens einem der vorhergehenden Ansprüche,
**dadurch gekennzeichnet,**
**dass** der spektrale Transmissionsgrad T bei einer Wellenlänge von 380 nm und einer Dicke von 2 mm mindestens 85% beträgt.

**8.** Optisches Element nach Anspruch 7,
**dadurch gekennzeichnet,**
**dass** der spektrale Transmissionsgrad T bei einer Wellenlänge von 450 nm und einer Dicke von 2 mm mindestens 88% beträgt.

**9.** Optisches Element nach mindestens einem der vorhergehenden Ansprüche,
**dadurch gekennzeichnet,**
**dass** der Brechungsindex n_{D} des Kunststoffs bei einer Wellenlänge von 550 nm im wesentlichen 1,65 beträgt.

**10.** Optisches Element nach mindestens einem der vorhergehenden Ansprüche,
**dadurch gekennzeichnet,**
**dass** sein thermischer Ausdehnungskoeffizient im wesentlichen 50·10⁻⁶ K⁻¹ beträgt.

**11.** Optisches Element nach mindestens einem der vorhergehenden Ansprüche,
**dadurch gekennzeichnet,**
**dass** es vibrationsfest nach Testnorm RTCA DO-160 E ist.

**12.** Optisches Element nach mindestens einem der vorhergehenden Ansprüche,
**dadurch gekennzeichnet,**
**dass** dem Kunststoff Füllstoffe und/oder Verstärkungsstoffe und/oder Effektstoffe bis zu einer Menge von 30 Gewichtsprozent beigemischt sind, wobei der Füllstoff bevorzugt TiO₂ enthält.

**13.** Optisches Element nach mindestens einem der vorhergehenden Ansprüche,
**dadurch gekennzeichnet,**
**dass** es mit einer UV-Schutzschicht beschichtet ist.

**14.** Verwendung eines optisches Elements nach mindestens einem der Ansprüche 1 bis 13 als optisches Element in Fahrzeugen, insbesondere in Flugzeugkabinen oder in Schiffen, oder in der Architektur.

**15.** Verwendung nach Anspruch 14 als Fenster in Fahrzeugen, insbesondere in Flugzeugen oder Schiffen.

**16.** Verwendung nach Anspruch 14 als Raumteiler.

**17.** Verwendung nach Anspruch 14 als Projektionsfläche.

**18.** Verwendung nach Anspruch 14 als Lichtverteilungskörper.

**19.** Verwendung nach Anspruch 14 als Lichtaustrittskörper.

**20.** Verwendung nach Anspruch 14 als Leuchtpanel.

**21.** Verwendung nach Anspruch 20 als Lichtleitplatte in Flachbildschirmen.

**22.** Verwendung nach Anspruch 19 als Abdeckung von Bildschirmen.

**23.** Verwendung nach Anspruch 19 oder als Abdeckung von Lichtquellen.

**23.** Verwendung nach Anspruch 14 als beleuchtbares Gewebe.

**24.** Verwendung nach Anspruch 14 als Spiegelträger, wobei die reflektierende Fläche auf der dem Nutzer abgewandten Seite des optischen Elements aufgebracht ist, so dass die reflektierte Strahlung durch den Kunststoff hindurchtritt.
